(19) Europäisches Patentamt / European Patent Office / Office européen des brevets

(11) **EP 3 008 851 B1**

(12) **FASCICULE DE BREVET EUROPEEN**

(45) Date de publication et mention de la délivrance du brevet:
**04.04.2018 Bulletin 2018/14**

(21) Numéro de dépôt: **14738552.0**

(22) Date de dépôt: **10.06.2014**

(51) Int Cl.:
*H04L 9/30* *(2006.01)*

(86) Numéro de dépôt international:
**PCT/FR2014/051400**

(87) Numéro de publication internationale:
**WO 2014/199071 (18.12.2014 Gazette 2014/51)**

(54) **PROCÉDÉ ET SYSTÈME DE DÉLÉGATION D'UN CALCUL D'UNE VALEUR DE COUPLAGE BILINÉAIRE À UN SERVEUR DE CALCUL**

VERFAHREN UND SYSTEM ZUM WEITERLEITEN DER BERECHNUNG EINES BILINEAREN KUPPLUNGSWERTES FÜR EINEN BERECHNUNGSSERVER

SYSTEM AND METHOD FOR DELEGATING BILINEAR PAIRING COMPUTATIONS TO A SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.06.2013 FR 1355373**

(43) Date de publication de la demande:
**20.04.2016 Bulletin 2016/16**

(73) Titulaire: **Orange**
**75015 Paris (FR)**

(72) Inventeurs:
• **CANARD, Sébastien**
**F-14000 Caen (FR)**
• **DEVIGNE, Julien**
**35000 Rennes (FR)**
• **SANDERS, Olivier**
**35230 Bourgbarre (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
**WO-A2-2005/125085**

• **BENOÃ Â TM T CHEVALLIER-MAMES ET AL: "Secure Delegation of Elliptic-Curve Pairing", 14 avril 2010 (2010-04-14), SMART CARD RESEARCH AND ADVANCED APPLICATION, SPRINGER BERLIN HEIDELBERG, BERLIN, HEIDELBERG, PAGE(S) 24 - 35, XP019140042, ISBN: 978-3-642-12509-6 sections 4, 5 et 6**
• **Hong-Bin Tsai: "Secure Delegation of Pairing Computation", , 29 août 2005 (2005-08-29), XP055109844, NTU Extrait de l'Internet: URL:http://fractal.ee.ntu.edu.tw/~hbtsai/S ecure_Delegation_of_Pairing_Computation.pd f [extrait le 2014-03-25]**
• **BO GYEONG KANG ET AL: "Efficient Delegation of Pairing Computation", INTERNATIONAL ASSOCIATION FOR CRYPTOLOGIC RESEARCH,, vol. 20050811:071923, 11 août 2005 (2005-08-11), pages 1-7, XP061001654,**

**Description**

Arrière-plan de l'invention

L'invention se rapporte au domaine général de la protection des données numériques et de la cryptographie.

Elle concerne plus particulièrement un procédé de délégation sécurisée d'un calcul d'une valeur d'une application ou couplage bilinéaire par une entité dite de confiance auprès d'un serveur de calcul.

L'invention s'applique ainsi de façon privilégiée mais non limitative à de nombreux protocoles cryptographiques (à clé publique notamment, tels que des protocoles cryptographiques de signature numérique de message) faisant appel aux outils mathématiques complexes que sont les couplages bilinéaires.

De nombreux protocoles cryptographiques ont en effet vu le jour récemment dans le domaine des télécommunications, et notamment des communications mobiles, afin de permettre aux différents acteurs de ce domaine (ex. opérateurs, fournisseurs de service, etc.) d'offrir à leurs clients de nouvelles fonctionnalités et/ou services tout en garantissant la protection et le respect de leur vie privée. Ces protocoles requièrent souvent l'utilisation de techniques mathématiques complexes tels que les couplages (ou « pairings » en anglais) bilinéaires.

Pour rappel, un couplage bilinéaire noté e est une application définie sur un ensemble G1xG2 vers un ensemble GT contenu dans un groupe G, où G1, G2 et GT désignent généralement des groupes cycliques d'ordre p, p étant un nombre premier. Cette application e vérifie les propriétés suivantes :

(1) *Bilinéarité :* $\forall$ X1 $\in$ G1, $\forall$ X2 $\in$ G2, $\forall\,(a,b) \in \mathbb{Z}_p$, e(aX1,bX2) = e(X1,X2)$^{ab}$ où $\mathbb{Z}_p$ désigne l'ensemble des entiers relatifs inférieurs à p.

(2) *Non dégénérée :* Pour X1 $\neq$ 1$_{G1}$ et X2 $\neq$ 1$_{G2}$, e(X1,X2) $\neq$ 1$_{GT}$ où 1$_{G1}$, 1$_{G2}$ et 1$_{GT}$ désignent respectivement les unités des ensembles G1, G2 et GT.

(3) *Calculable :* il existe un algorithme efficace pour calculer e(X1,X2), $\forall$ X1 $\in$ G1, $\forall$ X2 $\in$ G2.

Bien que de tels couplages bilinéaires soient connus depuis longtemps, leur application au domaine de la cryptographie est relativement récente. Par ailleurs, l'implémentation de ces outils nécessite une forte puissance de calcul, ce qui rend leur utilisation difficile en pratique par des entités de faible puissance comme par exemple par une carte à puce telle qu'une carte d'identité mobile ou carte SIM (Subscriber Identity Module).

Une solution classique pour remédier à cet inconvénient consiste à déléguer le calcul des couplages bilinéaires à une entité plus puissante, que l'on désigne de façon générale par serveur de calcul dans la description. Ainsi, par exemple, pour une carte SIM, ce serveur de calcul peut être le téléphone dans lequel est insérée la carte SIM.

Il convient de noter que la délégation des calculs de couplages bilinéaires peut être envisagée dans d'autres circonstances. Ainsi, par exemple, un ordinateur peut aussi avoir un intérêt à déléguer certains calculs cryptographiques à un serveur informatique distant pour se libérer du temps pour d'autres processus (cryptographiques ou non).

Bien que le serveur de calcul soit capable de mener efficacement le calcul du couplage bilinéaire qui lui a été délégué, il n'offre pas nécessairement les mêmes garanties en termes de sécurité que l'entité qui lui a délégué ce calcul. A titre illustratif, dans l'exemple précédent, si la carte SIM d'un téléphone mobile constitue un élément sécurisé, il n'en est pas de même du téléphone qui la reçoit qui peut être corrompu par des applications malveillantes telles que des virus.

Par conséquent, un problème important qui se pose lorsqu'une entité dite de confiance délègue le calcul d'un couplage bilinéaire à un serveur de calcul est la vérifiabilité de la valeur de couplage bilinéaire fournie par le serveur de calcul. En d'autres termes, il est important pour l'entité de confiance de pouvoir s'assurer que la valeur de couplage bilinéaire qui a été calculée et fournie par le serveur de calcul est correcte. Il convient de noter qu'une entité de confiance qui accepte et utilise dans un protocole cryptographique une valeur de couplage bilinéaire évaluée par un serveur de calcul, sans prendre le soin de la vérifier, s'expose à de graves problèmes de sécurité pouvant aller bien au-delà de simples dénis de service : l'acceptation d'une signature numérique invalide émise par une entité malveillante peut par exemple entraîner la transmission à cette entité de données sensibles.

Chevallier-Mames et al. ont proposé, dans leur article intitulé « Secure Délégation of Elliptic-Curve Pairing », IACR Cryptology ePrint Archive 2005, un mécanisme de délégation par une entité de confiance d'un calcul de couplage bilinéaire à un serveur de calcul, qui permet la vérifiabilité des couples bilinéaires évalués par le serveur de calcul par l'entité de confiance. Toutefois ce mécanisme est peu efficace en termes de ressources : en effet, sept exponentiations dans le groupe GT (il s'agit des opérations les plus coûteuses en termes de complexité) sont nécessaires pour garantir cette vérifiabilité, de sorte que le mécanisme de délégation proposé dans Chevallier-Mames semble difficilement utilisable en pratique.

Il existe donc un besoin d'un mécanisme de délégation sécurisée d'une valeur de couplage bilinéaire à un serveur de calcul, permettant la vérifiabilité de la valeur retournée par celui-ci moyennant une intégration efficace et raisonnable (i.e. réduite) en termes de complexité.

Objet et résumé de l'invention

L'invention répond notamment à ce besoin en proposant un procédé de délégation par une entité d'un calcul d'une valeur de couplage bilinéaire e(A,B) entre deux valeurs A et B à un serveur de calcul, ce procédé de délégation comprenant :

- une étape de sélection, par cette entité, de deux éléments P1 et P2 publics et de deux éléments S1 et S2 maintenus secrets par cette entité, deux éléments parmi les éléments P1, P2, S1 et S2 étant sélectionnés parmi les valeurs A et B respectivement ;
- une étape de génération par cette entité, de quatre éléments :

$$R1 = vS1,$$

$$R2 = uS2,$$

$$T1 = uP1 + S1,$$

et

$$T2 = vP2 + S2,$$

où u et v désignent des aléas ;
- une étape de transmission par cette entité des éléments R1, R2, T1 et T2 au serveur de calcul ;
- une étape de calcul, par le serveur de calcul, de deux valeurs a1 et a2 vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun des entiers étant égal à 1 ou à un entier prédéterminé c, et D1 et D2 désignant deux éléments publics choisis parmi les valeurs A et B ou les éléments R1 et R2 ;
- une étape de transmission par le serveur de calcul des valeurs a1 et a2 à l'entité ; et
- une étape d'obtention de la valeur de couplage e(A,B) par l'entité à partir de la valeur a1 ou de la valeur a2.

Il convient de noter que par délégation du calcul de la valeur de couplage bilinéaire à un serveur de calcul, on n'entend pas uniquement au sens de l'invention le calcul par le serveur de la valeur e(A,B). En effet, cette délégation a pour but notamment que le serveur de calcul réalise les calculs les plus coûteux en termes de ressources menant à la valeur de couplage bilinéaire. En d'autres termes, la délégation au sens de l'invention inclut également le cas où le serveur de calcul calcule et fournit à l'entité une valeur distincte de la valeur de couplage bilinéaire e(A,B), mais à partir de laquelle l'entité peut aisément extraire, moyennant des opérations relativement simples (ex. multiplication), la valeur de couplage bilinéaire e(A,B).

L'invention, grâce au choix judicieux des valeurs échangées entre l'entité et le serveur de calcul (i.e. R1, R2, T1 et T2 d'une part, et a1 et a2 d'autre part), propose une solution permettant à l'entité de déléguer efficacement et de manière vérifiable un calcul de couplage bilinéaire. Les valeurs a1 et a2 peuvent en effet être utilisées de manière très simple par l'entité, en les reportant dans des égalités prédéterminées reliant ces valeurs à des éléments connus de l'entité, pour d'une part, extraire ou déduire la valeur de couplage bilinéaire e(A,B) recherchée, et d'autre part vérifier que la valeur extraite provenant du serveur de calcul est correcte.

La solution proposée par l'invention présente l'avantage de ne requérir que très peu d'exponentiations dans l'ensemble dans lequel le couplage bilinéaire e(A,B) prend ses valeurs par rapport à l'état de la technique décrit par Chevallier-Mames et al. notamment (une voire deux en fonction des valeurs y et z par rapport à sept ou dix en fonction du mode de réalisation que l'on envisage). Le fait que l'entité s'appuie sur des éléments secrets pour déléguer le calcul au serveur de calcul permet en effet d'obtenir plus efficacement la vérifiabilité du calcul réalisé par le serveur de calcul. La construction par ailleurs des éléments R1, R2, T1 et T2 transmis par l'entité au serveur de calcul requiert moins d'opérations que dans les protocoles de l'état de la technique, ce qui permet de réduire davantage la complexité d'implémentation de l'invention.

On notera que l'invention s'appuie à plusieurs reprises sur le calcul d'éléments de type $x^c$ égaux à un certain couplage bilinéaire ou à un produit de couplages bilinéaires (comme par exemple $(a1)^y$ et $(a2)^z$). Toutefois, il est important de rappeler qu'en pratique, au vu des algorithmes de calcul existant tels que notamment l'algorithme connu de Tate-Lichtenbaum décrit dans le document intitulé « Handbook of elliptic and hyperlliptic curve cryptography » de R.M. Avanzi et al., obtenir de telles valeurs est nettement moins coûteux que de calculer un couplage bilinéaire. Par conséquent, l'invention en utilisant de telles valeurs plutôt que des couplages bilinéaires, réduit le nombre d'opérations requises pour permettre une délégation sécurisée et efficace du calcul de la valeur de couplage $e(A,B)$.

Conformément à l'invention, chaque entier y et z peut être choisi égal à 1 ou à un entier prédéterminé c.

Ainsi, par exemple, les entiers prédéterminés y et z peuvent être avantageusement choisis de sorte à vérifier :

$$z = c + 1 - y.$$

Selon un autre exemple, chaque entier y et z peut être choisi, indépendamment l'un de l'autre, égal à 1 ou à un entier prédéterminé c.

Dans un mode particulier de réalisation, le procédé de délégation comprend en outre une étape de vérification de la validité de la valeur de couplage $e(A,B)$ extraite, à l'aide d'une égalité reliant les valeurs a1 et a2, les aléas u et v et un élément S maintenu secret par l'entité. L'élément S est par exemple choisi tel que $S^y = e(S1,S2)$ ou $S = e(uP1, vP2)$. Un tel choix facilite la vérification de la validité de la valeur de couplage bilinéaire calculée par le serveur de calcul.

L'invention s'applique avantageusement à différentes configurations de valeurs A et B, i.e. selon si celles-ci sont publiques ou secrètes.

Ainsi, dans un mode particulier de réalisation, les valeurs A et B sont des valeurs publiques et :

$$P1 = A, \quad P2 = B,$$

et on choisit :

$$y = c,\ z = 1 \ \text{ou} \ y = z = 1.$$

Dans un autre mode de réalisation, les valeurs A et B sont au contraire maintenues secrètes par l'entité et :

$$S1 = A, \quad S2 = B,$$

et on choisit :

$$y = 1,\ z = c \ \text{ou} \ y = z = 1.$$

Ce mode de réalisation offre une solution permettant notamment d'assurer de manière efficace la vérifiabilité du calcul de la valeur de couplage bilinéaire $e(A,B)$ par le serveur de calcul, mais également sa confidentialité. Dans ce mode de réalisation en effet, l'entité reçoit la valeur de couplage bilinéaire masquée par un secret S connu uniquement de l'entité.

Dans un mode particulier de réalisation, l'élément secret S et les aléas u et v sont indépendants des valeurs A et B.

Ce mode de réalisation offre la possibilité de précalculer ces éléments, lors d'une étape préliminaire à l'exécution du protocole requérant le calcul de la valeur de couplage bilinéaire, par exemple lorsque l'entité est au repos (c'est-à-dire lorsqu'elle ne participe pas au protocole cryptographique requérant le couplage bilinéaire, ou de manière plus générale à d'autres processus impliquant une participation active de sa part).

L'invention propose ainsi un mécanisme de délégation, et s'appuie à ce titre sur deux dispositifs principalement, à savoir l'entité qui délègue le calcul de la valeur de couplage bilinéaire et le serveur de calcul à qui ce calcul est confié.

Ainsi, l'invention vise aussi ces deux dispositifs ainsi que les procédés mis en oeuvre par ceux-ci.

En d'autres termes, l'invention vise également selon un autre aspect, un procédé d'obtention par une entité d'une valeur de couplage bilinéaire e(A,B) entre deux valeurs A et B à partir d'une valeur calculée par un serveur de calcul, ce procédé d'obtention comprenant :

- une étape de sélection de deux éléments P1 et P2 publics et de deux éléments S1 et S2 maintenus secrets par l'entité, deux éléments parmi les éléments P1, P2, S1 et S2 étant sélectionnés parmi les valeurs A et B respectivement ;
- une étape de génération de quatre éléments :

$$R1 = vS1,$$

$$R2 = uS2,$$

$$T1 = uP1 + S1,$$

et

$$T2 = vP2 + S2,$$

où u et v désignent des aléas ;
- une étape de transmission de ces éléments R1, R2, T1 et T2 au serveur de calcul ;
- une étape de réception de deux valeurs a1 et a2 calculées par le serveur de calcul vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun de ces entiers étant égal à 1 ou à un entier prédéterminé c, et D1 et D2 désignant deux éléments publics choisis parmi les valeurs A et B ou les éléments R1 et R2 ;
- une étape d'obtention de la valeur de couplage e(A,B) à partir de la valeur a1 ou de la valeur a2.

Corrélativement l'invention vise aussi une entité apte à obtenir une valeur de couplage bilinéaire e(A,B) entre deux valeurs A et B à partir d'une valeur calculée par un serveur de calcul, cette entité comprenant :

- un module de sélection de deux éléments P1 et P2 publics et de deux éléments S1 et S2 maintenus secrets par l'entité, deux éléments parmi les éléments P1, P2, S1 et S2 étant sélectionnés parmi les valeurs A et B respectivement ;
- un module de génération de quatre éléments :

$$R1 = vS1,$$

$$R2 = uS2,$$

$$T1 = uP1 + S1,$$

et

$$T2 = vP2 + S2,$$

où u et v désignent des aléas ;
- un module de transmission de ces éléments R1, R2, T1 et T2 au serveur de calcul ;
- un module de réception de deux valeurs a1 et a2 calculées par le serveur de calcul et vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun de ces entiers étant égal à 1 ou à un entier prédéterminé c, et D1 et D2 désignant deux éléments publics choisis parmi les valeurs A et B ou les éléments R1 et R2 ;
- un module d'obtention de la valeur de couplage e(A,B) à partir de la valeur a1 ou de la valeur a2.

Selon un autre aspect encore, l'invention vise un procédé de transmission de valeurs calculées par un serveur de calcul à une entité de sorte à lui permettre d'obtenir une valeur de couplage bilinéaire e(A,B) entre deux valeurs A et B, ce procédé de transmission comprenant :

- une étape de réception en provenance de cette entité de quatre éléments R1, R2, T1 et T2 ;
- une étape de calcul de deux valeurs a1 et a2 vérifiant :

$$(a1)^y = e(T1, T2)[e(R1, P2)e(P1, R2)]^{-1},$$

et

$$(a2)^z = e(D1, D2)$$

P1 et P2 désignant deux éléments publics, y et z désignant deux entiers prédéterminés, chacun de ces entiers étant égal à 1 ou à un entier prédéterminé c, et D1 et D2 désignant deux éléments publics choisis parmi les valeurs A et B ou les éléments R1 et R2 ;
- une étape de transmission des valeurs a1 et a2 à cette entité.

Corrélativement, l'invention vise également un serveur de calcul comprenant :

- un module de réception en provenance d'une entité de quatre éléments R1, R2, T1 et T2 ;
- un module de calcul de deux valeurs a1 et a2 vérifiant :

$$(a1)^y = e(T1, T2)[e(R1, P2)e(P1, R2)]^{-1},$$

et

$$(a2)^z = e(D1, D2)$$

e désignant un couplage bilinéaire, P1 et P2 désignant deux éléments publics, y et z désignant deux entiers prédéterminés, chacun de ces entiers étant égal à 1 ou à un entier prédéterminé c, et D1 et D2 désignant deux éléments publics choisis parmi des valeurs A et B ou parmi les éléments R1 et R2 ;
- un module de transmission des valeurs a1 et a2 à l'entité.

L'invention vise aussi, selon un autre aspect, un système comprenant :

- une entité selon l'invention ; et
- un serveur de calcul l'invention,

cette entité étant apte à déléguer un calcul d'une valeur de couplage bilinéaire e(A,B) entre deux valeurs A et B au serveur de calcul.

Le procédé de transmission, le procédé d'obtention, l'entité, le serveur de calcul et le système selon l'invention bénéficient des mêmes avantages que le procédé de délégation.

On peut par ailleurs également envisager, dans d'autres modes de réalisation, que le procédé de délégation, le procédé d'obtention, le procédé de transmission, l'entité, le serveur de calcul et le système selon l'invention présentent en combinaison tout ou partie des caractéristiques précitées.

Dans un mode particulier de réalisation, les différentes étapes du procédé d'obtention et/ou du procédé de transmission sont déterminées par des instructions de programmes d'ordinateurs ou sont implémentées par une puce en silicium qui comprend des transistors adaptés pour constituer des portes logiques d'une logique câblée non programmable.

En conséquence, l'invention vise aussi un programme d'ordinateur sur un support d'informations, ce programme étant susceptible d'être mis en oeuvre dans une entité ou plus généralement dans un ordinateur, ce programme comportant des instructions adaptées à la mise en oeuvre des étapes d'un procédé d'obtention tel que décrit ci-dessus.

L'invention vise également un programme d'ordinateur sur un support d'informations, ce programme étant susceptible d'être mis en oeuvre dans un serveur de calcul ou plus généralement dans un ordinateur, ce programme comportant des instructions adaptées à la mise en oeuvre des étapes d'un procédé de transmission tel que décrit ci-dessus.

Ces programmes peuvent utiliser n'importe quel langage de programmation, et être sous la forme de codes source, codes objet, ou de codes intermédiaires entre codes source et codes objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 représente, de façon schématique, un système, une entité et un serveur de calcul conformes à l'invention dans un mode particulier de réalisation ;
- les figures 2, 3 et 4 illustrent trois modes de réalisation distincts du procédé de délégation, et de façon correspondante des procédés d'obtention et de transmission selon l'invention.

Description détaillée de l'invention

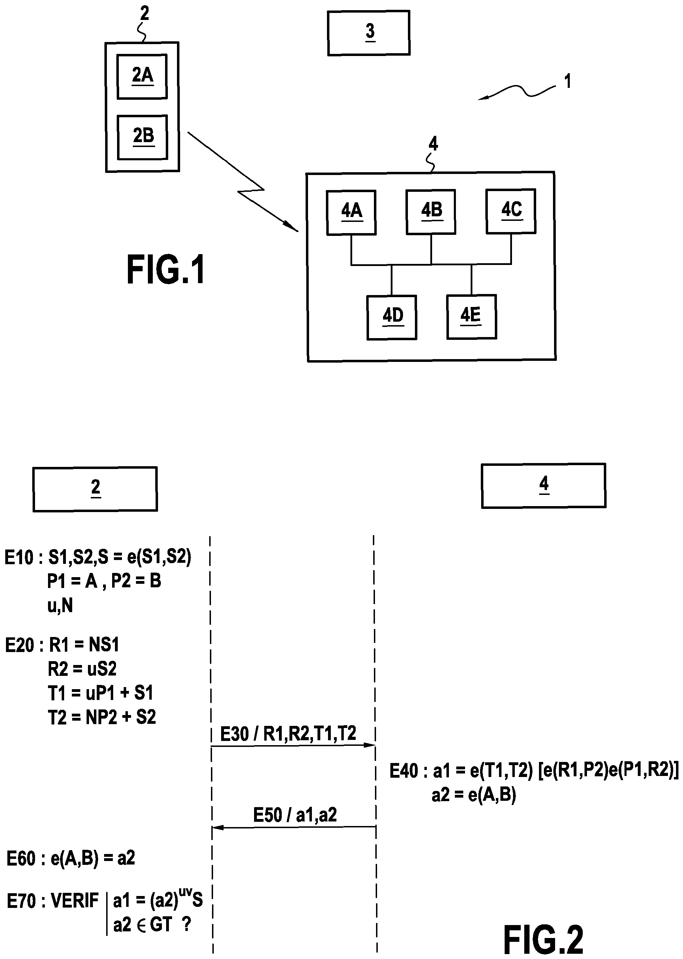

La **figure 1** représente, dans son environnement, un système 1 conforme à l'invention, dans un mode particulier de réalisation.

Le système 1 comprend :

- une entité dite de confiance 2, conforme à l'invention, impliquée ici dans un protocole cryptographique à clé publique avec une autre entité 3 dite signataire. Ce protocole cryptographique à clé publique est par exemple un protocole d'authentification de l'entité 3 auprès de l'entité 2, s'appuyant sur le calcul par l'entité 2 d'un couplage bilinéaire. Un tel protocole est par exemple le protocole de signature dû à Boneh, Lynn et Shacham, présenté dans l'article « Short Signature from the Weil Pairing » de la conférence Asiacrypt 2001 ;

- un serveur de calcul 4, conforme à l'invention, auquel l'entité de confiance 2 délègue le calcul de ce couplage bilinéaire.

Aucune limitation n'est attachée à la nature en soi des entités 2 et 3 et du serveur de calcul 4, la seule contrainte à proprement parler étant que le serveur de calcul 4 dispose de ressources nécessaires pour évaluer un couplage bilinéaire.

Ainsi, par exemple, l'entité 2 peut être une carte SIM cherchant à authentifier une entité 3 d'un réseau de télécommunications cherchant à accéder aux données de l'entité 2 ou à les modifier, et déléguant à cet effet le calcul du couplage bilinéaire requis dans cette authentification à un téléphone 4 dans lequel elle est insérée. Selon un autre exemple, l'entité 2 peut être un ordinateur cherchant à authentifier un fournisseur de service 3 et faisant appel à un serveur informatique 4 pour réaliser le calcul du couplage bilinéaire dont il a besoin lors de cette authentification.

De même, aucune limitation n'est attachée au protocole cryptographique dans lequel est impliqué l'entité de confiance 2 avec l'entité signataire 3 et qui requiert le calcul d'un (ou de plusieurs) couplage(s) bilinéaire(s).

En outre, dans l'exemple envisagé ici, on suppose que c'est l'entité 2 qui délègue le calcul du couplage bilinéaire au serveur de calcul 4. En variante, l'entité 3 peut également le cas échéant déléguer un tel calcul (et être une entité conforme à l'invention) notamment lorsqu'elle ne dispose pas de puissance de calcul suffisante pour mener ce calcul. Ainsi l'invention s'applique à diverses configurations de délégation (l'entité 2 délègue un calcul de couplage bilinéaire au serveur de calcul 4, ou c'est l'entité 3 qui délègue un tel calcul au serveur de calcul 4, ou encore les deux entités 2 et 3 délèguent un tel calcul au serveur de calcul 4 conformément à l'invention).

Dans le mode de réalisation décrit ici, l'entité 2 intègre une puce en silicium 2A et des moyens de communication 2B avec l'entité signataire 3 et le serveur de calcul 4.

La puce en silicium 2A comprend des transistors adaptés pour constituer des portes logiques d'une logique câblée non programmable permettant l'exécution des étapes d'un procédé d'obtention d'une valeur de couplage bilinéaire conforme à l'invention. Ces étapes sont décrites ultérieurement en référence aux figures 2 à 4, pour divers modes de réalisation.

Cette logique câblée définit de façon correspondante des modules fonctionnels de l'entité 2 aptes à mettre en oeuvre les étapes du procédé d'obtention d'une valeur de couplage bilinéaire conforme à l'invention, et notamment un module de sélection d'éléments publics et secrets, un module de génération d'éléments R1, R2, T1 et T2 tels que décrits ultérieurement, un module de communication qui coopère avec les moyens de communication 2B pour communiquer avec le serveur de calcul 4 et qui est apte à transmettre les éléments R1, R2, T1 et T2 générés par l'entité et/ou à recevoir des valeurs calculées par le serveur, un module d'obtention de la valeur de couplage bilinéaire souhaitée à partir des valeurs calculées par le serveur 4, et, dans le mode de réalisation décrit ici un module de vérification de la valeur de couplage bilinéaire obtenue.

La puce en silicium 2A constitue un support d'enregistrement conforme à l'invention.

Dans un autre mode de réalisation de l'invention, l'entité 2 dispose d'une architecture matérielle d'un ordinateur, et comprend notamment un processeur, une mémoire morte, une mémoire vive, une mémoire non volatile et des moyens de communication avec l'entité signataire 3 et avec le serveur de calcul 4. La mémoire morte de l'entité 2 constitue un support d'enregistrement conforme à l'invention, lisible par le processeur et sur lequel est enregistré un programme d'ordinateur conforme à l'invention, comportant des instructions pour l'exécution des étapes du procédé d'obtention d'une valeur de couplage bilinéaire conforme à l'invention. Ce programme d'ordinateur définit, de façon correspondante, les modules fonctionnels précités de l'entité 2 qui sont aptes à mettre en oeuvre les étapes du procédé d'obtention.

Le serveur de calcul 4 a, dans le mode de réalisation décrit ici, l'architecture matérielle d'un ordinateur. Il comprend notamment un processeur 4A, une mémoire morte 4B, une mémoire vive 4C, une mémoire non volatile 4D et des moyens de communication 4E avec l'entité 2.

La mémoire morte 4B du serveur de calcul constitue un support d'enregistrement conforme à l'invention, lisible par le processeur 4A et sur lequel est enregistré un programme d'ordinateur conforme à l'invention, comportant des instructions pour l'exécution des étapes d'un procédé de transmission selon l'invention décrites ultérieurement en référence aux figures 2 à 4, dans divers modes de réalisation. Ce programme d'ordinateur définit, de façon correspondante, des modules fonctionnels du serveur de calcul aptes à mettre en oeuvre les étapes du procédé de transmission selon l'invention, et notamment un module de réception d'éléments en provenance de l'entité 2, un module de calcul de valeurs particulières (de couplage ou des valeurs intermédiaires) à partir de ces éléments et un module de transmission des valeurs ainsi calculées à l'entité 2.

Nous allons maintenant décrire en référence aux figures 2 à 4, les principales étapes du procédé d'obtention d'une valeur de couplage bilinéaire telles qu'elles sont mises en oeuvre par l'entité 2, ainsi que les principales étapes du procédé de transmission telles qu'elles sont mises en oeuvre par le serveur de calcul 4, lorsque le système 1 met en oeuvre un procédé de délégation du calcul de cette valeur de couplage bilinéaire par l'entité 2 au serveur de calcul 4 dans différents modes de réalisation.

Dans la suite de la description, on désigne par « e » l'application ou couplage bilinéaire dont l'entité 2 souhaite déléguer le calcul au serveur de calcul 4, et par A et B les valeurs auxquelles on applique ce couplage bilinéaire. La valeur résultant de cette application est notée e(A,B).

Dans l'exemple envisagé ici, le couplage bilinéaire e est une application définie sur un ensemble G1xG2 vers un ensemble GT contenu dans un groupe G, G désignant le plus petit corps fini contenant GT. G1 et G2 désignent des groupes cycliques (additifs) d'ordre p, et GT désigne un groupe (multiplicatif) cyclique d'ordre p, où p est un nombre premier. Dans la suite de la description on désigne par c le nombre d'éléments du groupe G divisé par le nombre d'éléments de GT. L'application e vérifie les propriétés de bilinéarité, non-dégénérescence et d'exécution mentionnées précédemment.

En variante, on peut envisager des groupes G1, G2 et GT non cycliques d'ordre p.

Il convient de noter qu'aucune limitation n'est attachée au type, c'est-à-dire à la forme à proprement parler du couplage bilinéaire e considéré. L'invention s'applique ainsi indifféremment à tout type de couplage bilinéaire, comme notamment à un couplage de Tate, connu de l'homme du métier.

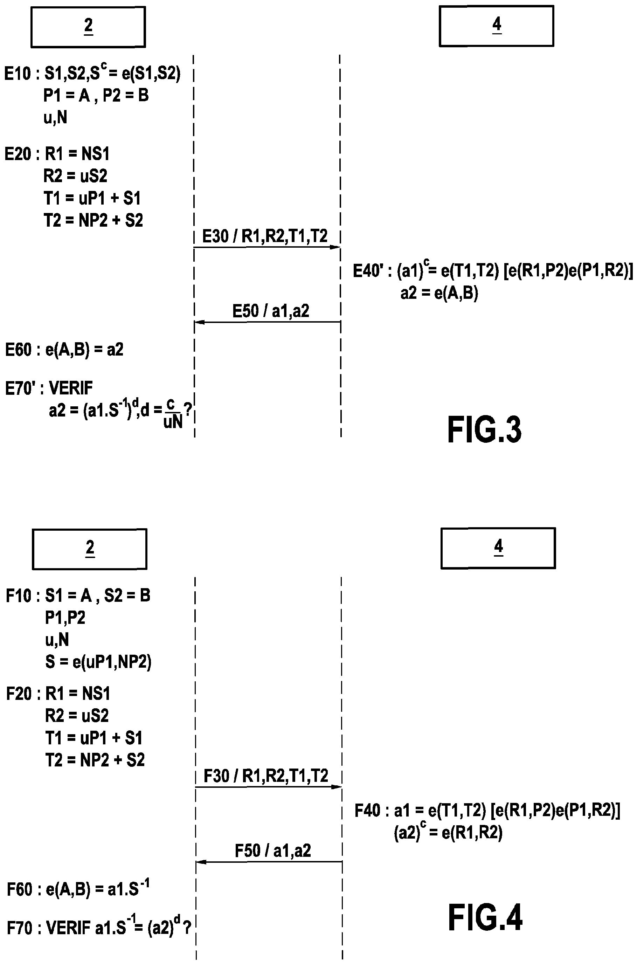

Les modes de réalisation illustrés aux figures 2 et 3 ont une application privilégiée lorsque les valeurs A et B des groupes G1 et G2 respectivement dont l'entité 2 cherche à obtenir une valeur de couplage bilinéaire sont publiques. Par publiques, on entend ici que ces valeurs sont connues du serveur de calcul 4 (et éventuellement d'autres entités), par opposition à des valeurs maintenues secrètes par l'entité 2 à l'égard (notamment) du serveur de calcul 4. Ces modes de réalisation permettent avantageusement de déléguer de façon sécurisée le calcul de la valeur e(A,B), et d'assurer la vérifiabilité de ce calcul en au plus deux exponentiations dans le groupe GT.

Dans le premier mode de réalisation illustré à la **figure 2,** l'entité 2 sélectionne deux éléments S1 et S2, respectivement dans les groupes G1 et G2, qu'elle maintient secrets, notamment à l'égard du serveur de calcul 4 (étape E10). On suppose par ailleurs que l'entité 2 connaît un troisième élément secret S défini par :

$$S=e(S1,S2).$$

Cette valeur de secret S est ici précalculée pour diverses valeurs prédéterminées de S1 et S2 (celles-ci appartenant aux groupes finis G1 et G2), et est téléchargée et stockée dans la puce de silicium 2A de l'entité 2 lors de sa création, de sorte à pouvoir être utilisée par l'entité 2 sans requérir de calcul de couplage de la part de celle-ci.

Toutefois, l'invention ne se limite pas à une configuration statique de l'entité 2 avec des valeurs de secret S précalculées avant sa création. On peut envisager que de nouvelles valeurs de secret S=e(S1,S2) soient téléchargées sur l'entité 2 pour d'autres valeurs de S1 et S2 à des moments ultérieurs (i.e. après sa création) via des moyens connus en soi, ces valeurs de secret pouvant être calculées par des entités distinctes de l'entité 2 (i.e. typiquement par des serveurs de calcul plus puissants), par exemple à l'aide du procédé de délégation selon l'invention tel qu'il est décrit ultérieurement en référence au troisième mode de réalisation.

L'entité 2 sélectionne également deux éléments publics P1 et P2 appartenant respectivement aux groupes G1 et G2, et connus ou destinés à être connus du serveur de calcul 4 (étape E10). Les valeurs A et B étant publiques, l'entité 2 choisit P1=A et P2=B.

L'entité 2 sélectionne deux aléas, notés u et v. Ces aléas sont des entiers choisis dans l'ensemble des entiers relatifs inférieurs à p.

Puis, elle génère quatre éléments notés R1, R2, T1 et T2 à partir des éléments S1, S2, P1, P2, u et v vérifiant (étape E20) :

$$R1=vS1,$$

$$R2=uS2,$$

$$T1=uP1+S1,$$

et

$$T2=vP2+S2,$$

R1 et T1 étant des éléments de G1, et R2 et T2 des éléments de G2.

Ces éléments sont par exemple générés à partir d'une courbe elliptique de façon connue en soi. En variante, elles peuvent être calculées par l'entité 2.

Ces quatre éléments R1, R2, T1 et T2 sont ensuite transmis par l'entité 2 au serveur de calcul 4 par l'intermédiaire de ses moyens de communication (étape E30).

Sur réception de ces éléments, le serveur de calcul 4 calcule deux valeurs de couplage, a1 et a2, vérifiant (étape E40) :

$$(a1) \quad = e(T1, T2)[e(R1, P2)e(P1, R2)]^{-1},$$

et

$$(a2) \quad = e(A, B)$$

Divers algorithmes permettant un calcul efficace de ces couplages bilinéaires et pouvant être mis en oeuvre par le serveur de calcul 4, sont décrits notamment dans le document intitulé « Handbook of elliptic and hyperlliptic curve cryptography » co-écrit par Roberto M. Avanzi, Henri Cohen, Christophe Doche, Gerhard Frey, Tanja Lange, Kim Nguyen, et Frederik Vercauteren, au chapitre 16. Le serveur de calcul 4 peut utiliser par exemple un algorithme de Tate-Lichtenbaum lorsque le couplage e est un couplage de Tate tel que couramment utilisé en cryptographie.

Le serveur de calcul 4 transmet les valeurs a1 et a2 ainsi calculées à l'entité 2 (étape E50).

L'entité 2 obtient directement à partir de la valeur a2 la valeur du couplage bilinéaire e(A,B) souhaitée (étape E60).

Puis, dans le mode de réalisation décrit ici, l'entité 2 vérifie la validité de cette valeur e(A,B) fournie par le serveur de calcul 4 (étape E70).

A cet effet, d'une part, elle s'assure que :

$$a1 = (a2)^{uv}.S \quad (eq1)$$

Cette égalité découle avantageusement du choix judicieux des éléments R1, R2, T1, T2 et des valeurs a1 et a2, ainsi que des propriétés du couplage bilinéaire e. La vérification de cette égalité ne requiert que peu de ressources puisqu'elle repose sur une exponentiation et une multiplication.

D'autre part, elle s'assure que la valeur a2 du couplage bilinéaire fournie par le serveur de calcul 4 est bien un élément de l'ensemble GT. Cette vérification ne présente pas de difficulté en soi pour l'homme du métier et n'est pas détaillée davantage ici. Elle peut être mise en oeuvre notamment via une exponentiation réalisée dans le groupe GT.

Si ces deux vérifications sont positives, l'entité 2 est convaincue que la valeur de couplage bilinéaire e(A,B) fournie par le serveur de calcul 4 est correcte. Sinon, elle rejette ce résultat.

On voit bien dès lors que dans ce mode de réalisation, seulement deux exponentiations dans le groupe GT sont requises pour s'assurer de la validité de la valeur de couplage bilinéaire e(A,B) calculée et transmise par le serveur de calcul 4 : une première exponentiation est requise pour vérifier l'égalité (eq 1), et une seconde exponentiation est requise pour vérifier que la valeur a2 appartient bien à l'ensemble GT.

Par ailleurs, il convient de noter que les valeurs R1 et R2 générées par l'entité 2 peuvent avantageusement être précalculées et stockées dans une mémoire de l'entité 2 lors d'une étape préliminaire puisqu'elles ne dépendent pas des valeurs A et B. De cette sorte, lors de l'exécution à proprement parler du protocole cryptographique nécessitant le calcul de la valeur de couplage bilinéaire e(A ,B), l'entité 2 peut se contenter de calculer « en direct » uniquement une multiplication scalaire et une addition dans G1, une multiplication scalaire et une addition dans G2 et deux exponentiations dans GT.

Nous allons maintenant décrire, en référence à la **figure 3**, un deuxième mode de réalisation de l'invention. Par souci de simplification, les étapes du deuxième mode de réalisation qui sont identiques à celles du premier mode de réalisation sont numérotées de façon similaire dans la suite de la description.

Le deuxième mode de réalisation tire profit de la structure de l'algorithme mis en oeuvre par le serveur de calcul 4 pour évaluer les valeurs de couplage a1 et a2.

En effet, de façon connue, de nombreux algorithmes utilisés pour évaluer des valeurs de couplage bilinéaires, et notamment l'algorithme de Tate-Lichtenbaum mentionné précédemment, se déroulent en deux phases, la dernière phase consistant en une exponentiation à la puissance c de la valeur intermédiaire issue de la première phase, c désignant pour rappel le nombre d'éléments du groupe G divisé par le nombre d'éléments de GT. Cette dernière phase est souvent la partie la plus coûteuse en termes de ressources, dans le calcul d'un couplage bilinéaire.

Ainsi, pour réduire encore davantage le nombre d'opérations nécessaires à la délégation, le deuxième mode de réalisation propose de transmettre à l'entité 2 non pas la valeur de couplage e(T1,T2)[e(R1,P2)e(P1,R2)]⁻¹, mais la valeur intermédiaire calculée et obtenue par le serveur de calcul 4 juste avant l'exponentiation menant à cette valeur de couplage, autrement dit une valeur a1 telle que :

$$(a1)^c = e(T1, T2)[e(R1, P2)e(P1, R2)]^{-1}$$

Plus précisément, en référence à la figure 3, et comme décrit précédemment dans le premier mode de réalisation à l'étape E10, l'entité 2 sélectionne deux éléments S1 et S2 respectivement dans les groupes G1 et G2, qu'elle maintient secrets à l'égard du serveur de calcul 4, et deux éléments publics pris respectivement dans les groupes G1 et G2 (étape E10'). Les éléments publics choisis par l'entité 2 sont P1=A et P2=B.

L'entité 2 connaît par ailleurs un troisième élément secret S (qui peut être précalculé et téléchargé dans l'entité 2, comme mentionné précédemment), tel que :

$$S^C = e(S1, S2)$$

L'entité 2 sélectionne également deux aléas u et v dans l'ensemble des entiers relatifs inférieurs à p.

Puis, elle génère quatre éléments notés R1, R2, T1 et T2 à partir des éléments S1, S2, P1, P2, u et v (à partir de points de courbe(s) elliptique(s) par exemple) vérifiant (étape E20) :

$$R1 = vS1,$$

$$R2 = uS2,$$

$$T1 = uP1 + S1,$$

et

$$T2 = vP2 + S2,$$

R1 et T1 étant des éléments de G1, et R2 et T2 des éléments de G2.

Ces quatre éléments R1, R2, T1 et T2 sont ensuite transmis par l'entité 2 au serveur de calcul 4 par l'intermédiaire de ses moyens de communication (étape E30).

Dans le deuxième mode de réalisation, sur réception de ces éléments, le serveur de calcul 4 calcule une valeur de couplage a2 et une valeur intermédiaire a1 telles que (étape E40') :

$$(a1)^c = e(T1, T2)[e(R1, P2)e(P1, R2)]^{-1},$$

et

$$(a2) = e(A, B)$$

Comme mentionné précédemment, il peut à cette fin utiliser des algorithmes de calcul de couplages bilinéaires connus, comme notamment l'algorithme de Tate-Lichtenbaum lorsque le couplage e est un couplage de Tate.

Le serveur de calcul 4 transmet les valeurs a1 et a2 ainsi calculées à l'entité 2 (étape E50).

Comme dans le premier mode de réalisation, l'entité 2 obtient directement à partir de la valeur a2 la valeur du couplage bilinéaire e(A,B) souhaitée (étape E60).

Puis, l'entité 2 vérifie la validité de cette valeur e(A,B) fournie par le serveur de calcul 4 (étape E70').

A cet effet, elle s'assure que :

$$a2 = (a1.S^{-1})^d \quad (eq2)$$

avec $d = \frac{c}{uv}$.

Cette égalité découle avantageusement du choix judicieux des éléments R1, R2, T1, T2 et des valeurs a1 et a2, ainsi que des propriétés du couplage bilinéaire e. La vérification de cette égalité ne requiert que peu de ressources puisqu'elle repose sur une unique exponentiation et une multiplication.

Par ailleurs, la vérification de l'égalité (eq2) permet en outre à l'entité 2 de s'affranchir de la vérification selon laquelle la valeur a2 du couplage bilinéaire fournie par le serveur 4 est un élément du groupe GT, puisque $(a1.S^{-1})^d$ est alors nécessairement un élément de GT.

Si la vérification de l'égalité (eq2) est positive, l'entité 2 est convaincue que la valeur de couplage bilinéaire e(A,B) fournie par le serveur de calcul 4 est correcte. Sinon, elle rejette ce résultat.

On voit bien dès lors que dans ce mode de réalisation, seulement une exponentiation dans le groupe GT est maintenant requise pour s'assurer de la validité de la valeur de couplage bilinéaire e(A,B) calculée et transmise par le serveur de calcul 4.

Nous allons maintenant décrire, en référence à la **figure 4,** un troisième mode de réalisation de l'invention.

Ce troisième mode de réalisation a une application privilégiée lorsque les valeurs A et B dont l'entité 2 cherche à obtenir une valeur de couplage bilinéaire e(A,B) sont secrètes, autrement dit, ne sont pas destinées à être divulguées au serveur de calcul 4. Ce troisième mode de réalisation permet ainsi, dans ce contexte, non seulement d'assurer la vérifiabilité de la valeur de couplage e(A,B) fournie par le serveur de calcul 4, mais également d'assurer la confidentialité des valeurs A, B et e(A,B).

Plus précisément, en référence à la figure 4, l'entité 2 sélectionne deux éléments publics P1 et P2, respectivement dans les groupes G1 et G2, dont elle connaît une valeur de couplage e(P1,P2) (étape F10).

De façon similaire aux premier et deuxième modes de réalisation, la valeur de couplage e(P1,P2) peut être avantageusement précalculée pour un ensemble prédéterminé de valeurs P1 et P2 (P1 et P2 appartenant à des groupes d'ordre fini p), et les valeurs ainsi précalculées être téléchargées et stockées dans la puce 2A de l'entité 2 lors de sa création, de sorte à éviter le calcul par l'entité 2 de la valeur de couplage e(P1,P2).

Toutefois, l'invention ne se limite pas à une configuration statique de l'entité 2 avec des valeurs de e(P1,P2) précalculées avant sa création. On peut envisager que de nouvelles valeurs de e(P1,P2) soient téléchargées sur l'entité 2 pour d'autres valeurs de P1 et P2 à des moments ultérieurs (i.e. après sa création) via des moyens connus en soi, ces valeurs pouvant être calculées par des entités distinctes de l'entité 2 (i.e. typiquement par des serveurs de calcul plus puissants), par exemple à l'aide d'un procédé de délégation selon l'invention.

L'entité 2 sélectionne par ailleurs deux aléas u et v dans l'ensemble des entiers relatifs inférieurs à p, puis détermine un élément secret S à partir de la valeur de couplage e(P1,P2) et des aléas u et v, selon :

$$S = e(uP1, vP2) = [e(P1, P2)]^{uv}$$

L'entité 2 sélectionne deux autres éléments S1 et S2 qu'elle maintient secrets à l'égard du serveur de calcul 4, en l'occurrence : S1=A et S2=B.

Puis, elle génère quatre éléments R1, R2, T1 et T2 à partir des éléments S1, S2, P1, P2, u et v, vérifiant (étape F20) :

$$R1=vS1,$$

$$R2=uS2,$$

$$T1=uP1+S1,$$

et

$$T2=vP2+S2.$$

R1 et T1 étant des éléments de G1, et R2 et T2 des éléments de G2.

Ces éléments peuvent être construits par exemple à partir de points de courbes elliptiques de façon connue de l'homme du métier.

Ces quatre éléments R1, R2, T1 et T2 sont ensuite transmis par l'entité 2 au serveur de calcul 4 par l'intermédiaire de ses moyens de communication (étape F30).

Dans le troisième mode de réalisation, sur réception de ces éléments, le serveur de calcul 4 calcule une valeur de couplage a1 et une valeur intermédiaire a2 telles que (étape F40') :

$$a1 = e(T1, T2)[e(R1, P2)e(P1, R2)]^{-1},$$

et

$$(a2)^c = e(R1, R2)$$

Comme mentionné précédemment, il peut à cet effet utiliser des algorithmes de calcul de couplages bilinéaires connus, comme notamment l'algorithme de Tate-Lichtenbaum lorsque le couplage e est un couplage de Tate.

Le serveur de calcul 4 transmet les valeurs a1 et a2 ainsi calculées à l'entité 2 (étape F50).

L'entité 2 obtient la valeur de couplage bilinéaire e(A,B) à partir de la valeur a1 en calculant a1.S$^{-1}$ (étape F60), c'est-à-dire :

$$e(A, B) = a1. S^{-1}$$

En d'autres termes, grâce aux valeurs échangées entre l'entité 2 et le serveur de calcul 4 conformément à l'invention, la valeur de couplage bilinéaire est masquée par l'élément secret S, et peut être obtenue par l'entité 2 à partir de la valeur a1 calculée par le serveur de calcul 4 moyennant une opération relativement peu complexe (multiplication). On assure ainsi d'une part que le serveur de calcul 4 calcule la valeur de couplage (ou tout du moins une valeur qui permette à l'entité 2 d'extraire aisément la valeur de couplage e(A,B)), et d'autre part que la confidentialité de A, B et de e(A,B) est garantie.

Dans le mode de réalisation décrit ici, l'entité 2 vérifie ensuite la validité de la valeur e(A,B) fournie par le serveur de calcul 4 (étape F70).

A cet effet, elle vérifie que :

$$e(A, B) = a1. S^{-1} = (a2)^d \quad (eq3)$$

avec $d = \frac{c}{uv}$.

Cette égalité découle avantageusement du choix judicieux des éléments R1, R2, T1, T2 et des valeurs a1 et a2, ainsi que des propriétés du couplage bilinéaire e. La vérification de cette égalité ne requiert que peu de ressources puisqu'elle repose sur une exponentiation et une multiplication. Cette exponentiation vient s'ajouter à celle calculée par l'entité 2 à l'étape F10 pour déterminer l'élément secret S.

Si la vérification de l'égalité (eq3) est positive, l'entité 2 est convaincue que la valeur de couplage bilinéaire e(A,B) dérivée de la valeur a1 fournie par le serveur de calcul 4 est correcte. Sinon, elle rejette ce résultat.

On voit bien dès lors que dans ce mode de réalisation, seulement deux exponentiations dans le groupe GT sont requises pour s'assurer de la validité et de la confidentialité de la valeur de couplage bilinéaire e(A,B) calculée et transmise par le serveur de calcul 4.

Il convient de noter qu'il est possible, comme dans le premier mode de réalisation, d'envisager le calcul et la transmission par le serveur de calcul 4 des valeurs :

$$a1 = e(T1, T2)[e(R1, P2)e(P1, R2)]^{-1},$$

et

$$a2 = e(R1, R2)$$

aux étapes F40 et F50. Les égalités appliquées aux étapes F60 et F70 doivent alors être modifiées de manière correspondante pour permettre à l'entité 2 d'extraire de a2 la valeur de couplage bilinéaire e(A,B) et de vérifier que la valeur extraite est correcte.

Par ailleurs, comme mentionné précédemment pour le premier et le deuxième modes de réalisation, il est possible dans le troisième mode de réalisation de précalculer lors d'une étape préliminaire certaines valeurs indépendantes des valeurs secrètes A et B (à savoir u, v et S), et de stocker les valeurs ainsi précalculées dans une mémoire de l'entité 2.

Ainsi l'invention propose dans ces différents modes de réalisation un protocole permettant d'assurer la vérifiabilité du calcul délégué auprès du serveur de calcul. Cette invention a de nombreuses applications dans le domaine des télécommunications et notamment de la cryptographie. Elle peut notamment servir pour vérifier des signatures émises en suivant le protocole proposé par Boneh, Lynn et Shacham cité précédemment, ou pour chiffrer des données numériques en utilisant le protocole proposé par Boneh et Franklin dans le document intitulé « Identity-Based Encryption from the Weil Pairing », Advances in Cryptology - CRYPTO 2001, 21st Annual International Cryptology Conference, Santa Barbara, California, USA, Août 19-23, 2001, Proceedings, Springer, Lecture Notes in Computer Science volume 2139, pages 213-229.

Il convient de noter que dans les trois modes de réalisation décrits ici, le serveur de calcul 4 est configuré pour calculer et fournir à l'entité 2 des valeurs a1 et a2 vérifiant de manière générale :

$$(a1)^y = e(T1, T2)[e(R1, P2)e(P1, R2)]^{-1},$$

et

$$(a2)^z = e(A, B) \text{ ou } e(R1, R2)$$

où y et z désignent deux entiers prédéterminés, chacun de ces entiers pouvant être égal à 1 ou à c. Pour améliorer l'efficacité du procédé de délégation (et diminuer le nombre d'exponentiations effectuées par l'entité 2), y et z peuvent par exemple être choisis avantageusement de sorte que : y=c+1-z.

## Revendications

1. Procédé de délégation par une entité (2) d'un calcul d'une valeur de couplage bilinéaire e(A,B) entre deux valeurs A et B à un serveur de calcul (4), ledit procédé de délégation comprenant :

   - une étape de sélection (E10,E10',F10), par ladite entité, de deux éléments P1 et P2 publics et de deux éléments S1 et S2 maintenus secrets par ladite entité, deux éléments parmi les éléments P1, P2, S1 et S2 étant sélectionnés parmi les valeurs A et B respectivement avec :

   $$P1=A \text{ et } P2 = B$$

   ou

   $$S1=A \text{ et } S2=B \text{ ;}$$

   - une étape de génération (E20,F20), par ladite entité, de quatre éléments :

   $$R1=vS1,$$

   $$R2=uS2,$$

$$T1 = uP1 + S1,$$

et

$$T2 = vP2 + S2,$$

où u et v désignent des aléas ;
- une étape de transmission (E30,F30) par ladite entité desdits éléments R1, R2, T1 et T2 audit serveur de calcul ;
- une étape de calcul (E40,E40',F40), par ledit serveur de calcul, de deux valeurs a1 et a2 vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun desdits entiers étant égal à 1 ou à un entier prédéterminé c, et D1 et D2 désignant deux éléments publics choisis parmi les valeurs A et B ou les éléments R1 et R2 ;
- une étape de transmission (E50,F50) par ledit serveur de calcul des valeurs a1 et a2 à ladite entité ; et
- une étape d'obtention (E60,E60',F60) de ladite valeur de couplage e(A,B) par ladite entité à partir de la valeur a1 ou de la valeur a2.

2. Procédé de délégation selon la revendication 1 comprenant en outre une étape de vérification (E70,E70',F70) de la validité de la valeur de couplage e(A,B) extraite, à l'aide d'une égalité reliant les valeurs a1 et a2, les aléas u et v et un élément S maintenu secret par ladite entité.

3. Procédé de délégation selon la revendication 2 dans lequel l'élément S et les aléas u et v sont indépendants des valeurs A et B.

4. Procédé de délégation selon la revendication 2 dans lequel l'élément S est tel que $S^y = e(S1,S2)$ ou égal à $e(uP1,vP2)$.

5. Procédé d'obtention par une entité d'une valeur de couplage bilinéaire e(A,B) entre deux valeurs A et B à partir d'une valeur calculée par un serveur de calcul, ledit procédé d'obtention étant destiné à être mis en oeuvre par ladite entité et comprenant :

- une étape de sélection de deux éléments P1 et P2 publics et de deux éléments S1 et S2 maintenus secrets par ladite entité, deux éléments parmi les éléments P1, P2, S1 et S2 étant sélectionnés parmi les valeurs A et B respectivement avec :

$$P1 = A \text{ et } P2 = B$$

ou

$$S1 = A \text{ et } S2 = B ;$$

- une étape de génération de quatre éléments :

$$R1 = vS1,$$

$$R2 = uS2,$$

$$T1 = uP1 + S1,$$

et

$$T2 = vP2 + S2,$$

où u et v désignent des aléas ;
- une étape de transmission desdits éléments R1, R2, T1 et T2 audit serveur de calcul ;
- une étape de réception de deux valeurs a1 et a2 calculées par ledit serveur de calcul vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun desdits entiers étant égal à 1 ou à un entier prédéterminé c, et D1 et D2 désignant deux éléments publics choisis parmi les valeurs A et B ou les éléments R1 et R2 ;
- une étape d'obtention de ladite valeur de couplage e(A,B) à partir de la valeur a1 ou de la valeur a2.

6. Procédé de transmission de valeurs calculées par un serveur de calcul à une entité de sorte à lui permettre d'obtenir une valeur de couplage bilinéaire e(A,B) entre deux valeurs A et B, ledit procédé de transmission étant destiné à être mis en oeuvre par ledit serveur de calcul et comprenant :

- une étape de réception en provenance de ladite entité de quatre éléments R1, R2, T1 et T2 ;
- une étape de calcul de deux valeurs a1 et a2 vérifiant :

$$(a1)^y = e(T1, T2)[e(R1, P2)e(P1, R2)]^{-1},$$

et

$$(a2)^z = e(D1, D2)$$

P1 et P2 désignant deux éléments publics, y et z désignant deux entiers prédéterminés, chacun desdits entiers étant égal à 1 ou à un entier prédéterminé c, et D1 et D2 désignant deux éléments publics choisis parmi les valeurs A et B ou les éléments R1 et R2 ;
- une étape de transmission des valeurs a1 et a2 à ladite entité.

7. Procédé selon l'une quelconque des revendications 1 à 6 dans lequel les entiers prédéterminés y et z vérifient :

$$z = c + 1 - y.$$

8. Procédé selon l'une quelconque des revendications 1 à 6 dans lequel les valeurs A et B sont maintenues secrètes par ladite entité et dans lequel :

$$S1 = A, S2 = B,$$

et

$$y=1, z=c \text{ ou } y=z=1.$$

9. Procédé selon l'une quelconque des revendications 1 à 6 dans lequel les valeurs A et B sont des valeurs publiques et dans lequel :

$$P1 = A, P2 = B,$$

et

$$y=c, z=1 \text{ ou } y=z=1.$$

10. Programme d'ordinateur comportant des instructions pour l'exécution des étapes du procédé d'obtention selon la revendication 5 ou d'un procédé de transmission selon la revendication 6 lorsque ledit programme est exécuté par un ordinateur.

11. Support d'enregistrement lisible par un ordinateur sur lequel est enregistré un programme d'ordinateur comprenant des instructions pour l'exécution des étapes du procédé d'obtention selon la revendication 5 ou d'un procédé de transmission selon la revendication 6.

12. Entité (2) apte à obtenir une valeur de couplage bilinéaire e(A,B) entre deux valeurs A et B à partir d'une valeur calculée par un serveur de calcul (4), ladite entité comprenant :

- un module de sélection de deux éléments P1 et P2 publics et de deux éléments S1 et S2 maintenus secrets par ladite entité, deux éléments parmi les éléments P1, P2, S1 et S2 étant sélectionnés parmi les valeurs A et B respectivement avec :

$$P1=A \text{ et } P2 = B$$

ou

$$S1=A \text{ et } S2=B \text{ ;}$$

- un module de génération de quatre éléments:

$$R1=vS1,$$

$$R2=uS2,$$

$$T1=uP1+S1,$$

et

$$T2=vP2+S2,$$

où u et v désignent des aléas ;
- un module de transmission desdits éléments R1, R2, T1 et T2 audit serveur de calcul ;
- un module de réception de deux valeurs a1 et a2 calculées par ledit serveur de calcul vérifiant :

$$(a1)^y = e(T1, T2)[e(R1, P2)e(P1, R2)]^{-1},$$

et

$$(a2)^z = e(D1, D2)$$

y et z désignant deux entiers prédéterminés, chacun desdits entiers étant égal à 1 ou à un entier prédéterminé c, et D1 et D2 désignant deux éléments publics choisis parmi les valeurs A et B ou les éléments R1 et R2 ;
- un module d'obtention de ladite valeur de couplage e(A,B) à partir de la valeur a1 ou de la valeur a2.

13. Serveur de calcul (4) comprenant :

- un module de réception en provenance d'une entité (2) de quatre éléments R1, R2, T1 et T2 ;
- un module de calcul de deux valeurs a1 et a2 vérifiant :

$$(a1)^y = e(T1, T2)[e(R1, P2)e(P1, R2)]^{-1},$$

et

$$(a2)^z = e(D1, D2)$$

e désignant un couplage bilinéaire, P1 et P2 désignant deux éléments publics, y et z désignant deux entiers prédéterminés, chacun desdits entiers étant égal à 1 ou à un entier prédéterminé c, et D1 et D2 désignant deux éléments publics choisis parmi des valeurs A et B ou parmi les éléments R1 et R2 ;
- un module de transmission des valeurs a1 et a2 à ladite entité.

14. Système (1) comprenant :

- une entité (2) selon la revendication 12 ; et
- un serveur de calcul (4) selon la revendication 13,

ladite entité étant apte à déléguer un calcul d'une valeur de couplage bilinéaire e(A,B) entre deux valeurs A et B audit serveur de calcul.

**Patentansprüche**

1. Verfahren zum Delegieren durch eine Entität (2) einer Berechnung eines bilinearen Kopplungswertes e(A,B) zwischen zwei Werten A und B an einen Rechen-Server (4), wobei das Delegationsverfahren Folgendes umfasst:

- einen Schritt (E10, E10', F10) des Auswählens durch die Entität von zwei öffentlichen Elementen P1 und P2 und von zwei durch die Entität geheim gehaltenen Elementen S1 und S2, wobei zwei Elemente unter den Elementen P1, P2, S1 und S2 unter den Werten A bzw. B gewählt werden, mit:

$$P1 = A \text{ und } P2 = B$$

oder

$$S1 = A \text{ und } S2 = B$$

- einen Schritt (E20, F20) des Erzeugens durch die Entität von vier Elementen:

$$R1 = vS1$$

$$R2 = uS2$$

$$T1 = uP1 + S1$$

und

$$T2 = vP2 + S2,$$

wobei u und v Unsicherheiten bezeichnen;
- einen Schritt (E30, F30) des Übertragens durch die Entität der Elemente R1, R2, T1 und T2 an den Rechen-Server;
- einen Schritt (E40, E40', F40) des Berechnens durch den Rechen-Server von zwei Elementen a1 und a2, die Folgendes erfüllen:

$$(a1)^y = e(T1,T2)[e(R1,P2)e(P1,R2)]^{-1},$$

und

$$(a2)^z = e(D1,D2),$$

wobei y und z vorgegebene ganze Zahlen bezeichnen, wobei jede der ganzen Zahlen gleich 1 oder einer vorgegebenen ganzen Zahl c ist, und wobei D1 und D2 zwei öffentliche Elemente bezeichnen, die unter den Werten A und B oder den Elementen R1 und R2 gewählt sind;
- einen Schritt (E50, F50) des Übertragens durch den Rechen-Server der Werte a1 und a2 an die Entität; und
- einen Schritt (E60, E60', F60) des Erhaltens des Kopplungswertes e(A,B) durch die Entität anhand des Wertes a1 oder des Wertes a2.

2. Delegationsverfahren nach Anspruch 1, das außerdem einen Schritt (E70, E70', F70) des Verifizierens der Gültigkeit des extrahierten Kopplungswertes e(A,B) mit Hilfe einer Gleichheit, die die Werte a1 und a2, die Unsicherheiten u und v und ein von der Entität geheim gehaltenes Element S miteinander verbindet, umfasst.

3. Delegationsverfahren nach Anspruch 2, wobei das Element S und die Unsicherheiten u und v von den Werten A und B unabhängig sind.

4. Delegationsverfahren nach Anspruch 2, wobei das Element S derart ist, dass $S^y = e(S1,S2)$ oder gleich e(uP1,vP2) ist.

5. Verfahren zum Erhalten durch eine Entität eines bilinearen Kopplungswertes e(A,B) zwischen zwei Werten A und B anhand eines durch einen Rechen-Server berechneten Wertes, wobei das Erhalteverfahren dazu bestimmt ist, von der Entität ausgeführt zu werden, und Folgendes umfasst:

- einen Schritt des Auswählens von zwei öffentlichen Elementen P1 und P2 und von zwei durch die Entität geheim gehaltenen Elementen S1 und S2, wobei zwei Elemente unter den Elementen P1, P2, S1 und S2 unter den Werten A bzw. B gewählt werden, mit:

$$P1 = A \quad und \quad P2 = B$$

oder

$$S1 = A \text{ und } S2 = B$$

- einen Schritt des Erzeugens von vier Elementen:

$$R1 = vS1$$

$$R2 = uS2$$

$$T1 = uP1 + S1$$

und

$$T2 = vP2 + S2,$$

wobei u und v Unsicherheiten bezeichnen;
- einen Schritt des Übertragens der Elemente R1, R2, T1 und T2 an den Rechen-Server;
- einen Schritt des Empfangens von zwei Werten a1 und a2, die durch den Rechen-Server berechnet werden und Folgendes erfüllen:

$$(a1)^y = e(T1,T2)[e(R1,P2)e(P1,R2)]^{-1},$$

und

$$(a2)^z = e(D1,D2),$$

wobei y und z zwei vorgegebene ganze Zahlen bezeichnen, wobei jede der ganzen Zahlen gleich 1 oder einer vorgegebenen ganzen Zahl c ist, und wobei D1 und D2 zwei öffentliche Elemente bezeichnen, die unter den Werten A und B oder den Elementen R1 und R2 gewählt werden;
- einen Schritt des Erhaltens des Kopplungswertes e(A,B) anhand des Wertes a1 oder des Wertes a2.

6. Verfahren zum Übertragen von durch einen Rechen-Server berechneten Werten an eine Entität, derart, dass ihr ermöglicht wird, einen bilinearen Kopplungswert e(A,B) zwischen zwei Werten A und B zu erhalten, wobei das Übertragungsverfahren dazu bestimmt ist, von dem Rechen-Server ausgeführt zu werden, und Folgendes umfasst:

- einen Schritt des Empfangens von der Entität von vier Elementen R1, R2, T1 und T2;
- einen Schritt des Berechnens von zwei Werten a1 und a2, die Folgendes erfüllen:

$$(a1)^y = e(T1,T2)[e(R1,P2)e(P1,R2)]^{-1},$$

und

$$(a2)^z = e(D1,D2),$$

wobei P1 und P2 zwei öffentliche Elemente bezeichnen, y und z zwei vorgegebene ganze Zahlen bezeichnen, wobei jede der ganzen Zahlen gleich 1 oder einer vorgegebenen ganzen Zahl c ist, und wobei D1 und D2 zwei öffentliche Elemente bezeichnen, die unter den Werten A und B oder den Elementen R1 und R2 gewählt werden;
- einen Schritt des Übertragens der Werte a1 und a2 an die Entität.

7. Verfahren nach einem der Ansprüche 1 bis 6, wobei die vorgegebenen ganzen Zahlen y und z Folgendes erfüllen:

$$z = c + 1 - y.$$

**8.** Verfahren nach einem der Ansprüche 1 bis 6, wobei die Werte A und B durch die Entität geheim gehalten werden und wobei:

$$S1 = A, \; S2 = B$$

und

$$y = 1, \; z = c \; oder \; y = z = 1.$$

**9.** Verfahren nach einem der Ansprüche 1 bis 6, wobei die Werte A und B öffentliche Werte sind und wobei:

$$P1 = A, \; P2 = B$$

und

$$y = c, \; z = 1 \; oder \; y = z = 1.$$

**10.** Computerprogramm, das Befehle für die Ausführung der Schritte des Erhalteverfahrens nach Anspruch 5 oder eines Übertragungsverfahrens nach Anspruch 6, wenn das Programm durch einen Computer ausgeführt wird, enthält.

**11.** Computerlesbarer Aufzeichnungsträger, auf den ein Computerprogramm aufgezeichnet ist, das Befehle für die Ausführung der Schritte des Erhalteverfahrens nach Anspruch 5 oder des Übertragungsverfahrens nach Anspruch 6 enthält.

**12.** Entität (2), das einen bilinearen Kopplungswert e(A,B) zwischen zwei Werten A und B anhand eines durch einen Rechen-Server (4) berechneten Wertes erhalten kann, wobei die Entität Folgendes umfasst:

- ein Modul zum Auswählen von zwei öffentlichen Elementen P1 und P2 und von zwei durch die Entität geheim gehaltenen Elementen S1 und S2, wobei zwei Elemente unter den Elementen P1, P2, S1 und S2 unter den Werten A bzw. B gewählt werden, mit:

$$P1 = A \; und \; P2 = B$$

oder

$$S1 = A \; und \; S2 = B$$

- ein Modul zum Erzeugen von vier Elementen:

$$R1 = vS1$$

$$R2 = uS2$$

$$T1 = uP1 + S1$$

und

$$T2 = vP2 + S2,$$

wobei u und v Unsicherheiten bezeichnen;
- ein Modul zum Übertragen der Elemente R1, R2, T1 und T2 an den Rechen-Server;
- ein Modul zum Empfangen von zwei durch den Rechen-Server berechneten Werten a1 und a2, die Folgendes erfüllen:

$$(a1)^Y = e(T1,T2)[e(R1,P2)e(P1,R2)]^{-1},$$

und

$$(a2)^z = e(D1,D2),$$

wobei y und z zwei vorgegebene ganze Zahlen bezeichnen, wobei jede der ganzen Zahlen gleich 1 oder einer vorgegebenen ganzen Zahl c ist, und wobei D1 und D2 zwei öffentliche Elemente bezeichnen, die unter den Werten A und B oder den Elementen R1 und R2 gewählt sind;
- ein Modul zum Erhalten des Kopplungswertes e(A,B) anhand des Wertes a1 oder des Wertes a2.

**13.** Rechen-Server (4), der Folgendes umfasst:

- ein Mittel zum Empfangen von vier Elementen R1, R2, T1 und T2 von einer Entität (2);
- ein Modul zum Berechnen von zwei Werten a1 und a2, die Folgendes erfüllen:

$$(a1)^Y = e(T1,T2)[e(R1,P2)e(P1,R2)]^{-1},$$

und

$$(a2)^z = e(D1,D2),$$

wobei e eine bilineare Kopplung bezeichnet, P1 und P2 zwei öffentliche Elemente bezeichnen, y und z zwei vorgegebene ganze Zahlen bezeichnen, wobei jede der ganzen Zahlen gleich 1 oder einer vorgegebenen ganzen Zahl c ist, und wobei D1 und D2 zwei öffentliche Elemente bezeichnen, die unter den Werten A und B oder unter den Elementen R1 und R2 gewählt sind;
- ein Modul zum Übertragen der Werte a1 und a2 an die Entität.

**14.** System (1), das Folgendes umfasst:

- eine Entität (2) nach Anspruch 12; und
- einen Rechen-Server (4) nach Anspruch 13,

wobei die Entität eine Berechnung eines bilinearen Kopplungswertes e(A,B) zwischen zwei Werten A und B an den Rechen-Server delegieren kann.

**Claims**

**1.** Method of delegation by an entity (2) of a calculation of a value of bilinear coupling e(A, B) between two values A and B to a calculation server (4), said method of delegation comprising:

- a step of selection (E10, E10', F10), by said entity, of two public elements P1 and P2 and of two elements S1 and S2 kept secret by said entity, two elements from among the elements P1, P2, S1 and S2 being selected from among the values A and B respectively with:

$$P1 = A \text{ and } P2 = B$$

or

$$S1 = A \text{ and } S2 = B;$$

- a step of generation (E20, F20), by said entity, of four elements:

$$R1 = vS1,$$

$$R2 = uS2,$$

$$T1 = uP1+S1,$$

and

$$T2 = vP2+S2,$$

where u and v denote randoms;
- a step of transmission (E30, F30) by said entity of said elements R1, R2, T1 and T2 to said calculation server;
- a step of calculation (E40, E40', F40), by said calculation server, of two values a1 and a2 satisfying:

$$(a1)^y = e(T1, T2)[e(R1, P2)e(P1, R2)]^{-1},$$

and

$$(a2)^z = e(D1, D2)$$

y and z denoting two predetermined integers, each of said integers being equal to 1 or to a predetermined integer c, and D1 and D2 denoting two public elements chosen from among the values A and B or the elements R1 and R2;
- a step of transmission (E50, F50) by said calculation server of the values a1 and a2 to said entity; and
- a step of obtaining (E60, E60', F60) of said coupling value e(A, B) by said entity on the basis of the value a1 or of the value a2.

2. Method of delegation according to Claim 1, furthermore comprising a step of verification (E70, E70', F70) of the validity of the coupling value e(A, B) extracted, with the aid of an equality linking the values a1 and a2, the randoms u and v and an element S kept secret by said entity.

3. Method of delegation according to Claim 2, in which the element S and the randoms u and v are independent of the values A and B.

4. Method of delegation according to Claim 2, in which the element S is such that $S^y = e(S1, S2)$ or equal to e(uP1, vP2).

5. Method of obtaining by an entity of a value of bilinear coupling e(A, B) between two values A and B on the basis of a value calculated by a calculation server, said method of obtaining being intended to be implemented by said entity and comprising:

- a step of selecting two public elements P1 and P2 and two elements S1 and S2 kept secret by said entity, two elements from among the elements P1, P2, S1 and S2 being selected from among the values A and B respectively

with:

$$P1 = A \text{ and } P2 = B$$

or

$$S1 = A \text{ and } S2 = B;$$

- a step of generating four elements:

$$R1 = vS1,$$

$$R2 = uS2,$$

$$T1 = uP1+S1,$$

and

$$T2 = vP2+S2,$$

where u and v denote randoms;
- a step of transmitting said elements R1, R2, T1 and T2 to said calculation server;
- a step of receiving two values a1 and a2 calculated by said calculation server satisfying:

$$(a1)^y = e(T1, T2)[e(R1, P2)e(P1, R2)]^{-1},$$

and

$$(a2)^z = e(D1, D2)$$

y and z denoting two predetermined integers, each of said integers being equal to 1 or to a predetermined integer c, and D1 and D2 denoting two public elements chosen from among the values A and B or the elements R1 and R2;
- a step of obtaining said coupling value e(A, B) on the basis of the value a1 or of the value a2.

6. Method of transmitting values calculated by a calculation server to an entity so as to allow it to obtain a value of bilinear coupling e(A, B) between two values A and B, said method of transmission being intended to be implemented by said calculation server and comprising:

- a step of receiving from said entity four elements R1, R2, T1 and T2;
- a step of calculating two values a1 and a2 satisfying:

$$(a1)^y = e(T1, T2)[e(R1, P2)e(P1, R2)]^{-1},$$

and

$$(a2)^z = e(D1, D2)$$

P1 and P2 denoting two public elements, y and z denoting two predetermined integers, each of said integers being equal to 1 or to a predetermined integer c, and D1 and D2 denoting two public elements chosen from among the values A and B or the elements R1 and R2;
- a step of transmitting the values a1 and a2 to said entity.

7. Method according to any one of Claims 1 to 6, in which the predetermined integers y and z satisfy:

$$z = c+1-y.$$

8. Method according to any one of Claims 1 to 6, in which the values A and B are kept secret by said entity and in which:

$$S1 = A, \quad S2 = B,$$

and

$$y = 1, \quad z = c \text{ or } y = z = 1.$$

9. Method according to any one of Claims 1 to 6, in which the values A and B are public values and in which:

$$P1 = A, \quad P2 = B,$$

and

$$y = c, \quad z = 1 \text{ or } y = z = 1.$$

10. Computer program comprising instructions for the execution of the steps of the method of obtaining according to Claim 5 or of a method of transmission according to Claim 6 when said program is executed by a computer.

11. Recording medium readable by a computer on which a computer program comprising instructions for the execution of the steps of the method of obtaining according to Claim 5 or of a method of transmission according to Claim 6 is recorded.

12. Entity (2) able to obtain a value of bilinear coupling e (A, B) between two values A and B on the basis of a value calculated by a calculation server (4), said entity comprising:

- a module for selecting two public elements P1 and P2 and two elements S1 and S2 kept secret by said entity, two elements from among the elements P1, P2, S1 and S2 being selected from among the values A and B respectively with:

$$P1 = A \text{ and } P2 = B$$

or

$$S1 = A \text{ and } S2 = B;$$

- a module for generating four elements:

$$R1 = vS1,$$

$$R2 = uS2,$$

$$T1 = uP1+S1,$$

and

$$T2 = vP2+S2,$$

where u and v denote randoms;
- a module for transmitting said elements R1, R2, T1 and T2 to said calculation server;
- a module for receiving two values a1 and a2 calculated by said calculation server satisfying:

$$(a1)^y = e(T1, T2)[e(R1, P2)e(P1, R2)]^{-1},$$

and

$$(a2)^z = e(D1, D2)$$

y and z denoting two predetermined integers, each of said integers being equal to 1 or to a predetermined integer c, and D1 and D2 denoting two public elements chosen from among the values A and B or the elements R1 and R2;
- a module for obtaining said coupling value e(A, B) on the basis of the value a1 or of the value a2.

13. Calculation server (4) comprising:

- a module for receiving from an entity (2) four elements R1, R2, T1 and T2;
- a module for calculating two values a1 and a2 satisfying:

$$(a1)^y = e(T1, T2)[e(R1, P2)e(P1, R2)]^{-1},$$

and

$$(a2)^z = e(D1, D2)$$

e denoting a bilinear coupling, P1 and P2 denoting two public elements, y and z denoting two predetermined integers, each of said integers being equal to 1 or to a predetermined integer c, and D1 and D2 denoting two public elements chosen from among values A and B or from among the elements R1 and R2;
- a module for transmitting the values a1 and a2 to said entity.

14. System (1) comprising:

- an entity (2) according to Claim 12; and
- a calculation server (4) according to Claim 13,

said entity being able to delegate a calculation of a value of bilinear coupling e(A, B) between two values A and B to said calculation server.

FIG.1

FIG.2

E10 : S1,S2,S = e(S1,S2)
P1 = A , P2 = B
u,N

E20 : R1 = NS1
R2 = uS2
T1 = uP1 + S1
T2 = NP2 + S2

E30 / R1,R2,T1,T2

E40 : a1 = e(T1,T2) [e(R1,P2)e(P1,R2)]
a2 = e(A,B)

E50 / a1,a2

E60 : e(A,B) = a2

E70 : VERIF | a1 = (a2)$^{uv}$S
| a2 ∈ GT ?

2 | 4

E10 : $S1,S2,S^c = e(S1,S2)$
P1 = A , P2 = B
u,N

E20 : R1 = NS1
R2 = uS2
T1 = uP1 + S1
T2 = NP2 + S2

E30 / R1,R2,T1,T2 →

E40' : $(a1)^c = e(T1,T2) [e(R1,P2)e(P1,R2)]$
a2 = e(A,B)

← E50 / a1,a2

E60 : e(A,B) = a2

E70' : VERIF
$a2 = (a1.S^{-1})^d, d = \dfrac{c}{uN}$ ?

## FIG.3

2 | 4

F10 : S1 = A , S2 = B
P1,P2
u,N
S = e(uP1,NP2)

F20 : R1 = NS1
R2 = uS2
T1 = uP1 + S1
T2 = NP2 + S2

F30 / R1,R2,T1,T2 →

F40 : $a1 = e(T1,T2) [e(R1,P2)e(P1,R2)]$
$(a2)^c = e(R1,R2)$

← F50 / a1,a2

F60 : $e(A,B) = a1.S^{-1}$

F70 : VERIF $a1.S^{-1} = (a2)^d$ ?

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- « Identity-Based Encryption from the Weil Pairing », Advances in Cryptology - CRYPTO 2001, 21st Annual International Cryptology Conference, Santa Barbara, California, USA, Août 19-23, 2001, Proceedings. **BONEH ; FRANKLIN.** Lecture Notes in Computer Science. Springer, 19 Août 2001, vol. 2139, 213-229